# EUROPEAN PATENT APPLICATION

(11) **EP 1 260 711 A2**
(43) Date of publication of application: **27.11.2002**
(21) Application number: 02011377.5
(22) Date of filing: 23.05.2002
(51) Int. Cl.: F04B 27/10

(54) **Compressor provided with sliding bearing**

(30) Priority: 24.05.2001 JP 2001155601
(71) Applicant: Kabushiki Kaisha Toyota Jidoshokki, Kariya-shi, Aichi-ken (JP)
(72) Inventor: Suitou, Ken, Kariya-shi, Aichi-ken (JP); Tsubai, Shinji, Kariya-shi, Aichi-ken (JP); Gennami, Hiroyuki, Kariya-shi, Aichi-ken (JP); Kuroki, Kazuhiro, Kariya-shi, Aichi-ken (JP); Fukutani, Yoshikazu, Kariya-shi, Aichi-ken (JP); Egawa, Satoru, Kariya-shi, Aichi-ken (JP); Kawai, Toshihiro, Kariya-shi, Aichi-ken (JP); Kurakake, Hirotaka, Kariya-shi, Aichi-ken (JP); Kawachi, Shigeki, Kariya-shi, Aichi-ken (JP); Iida, Hidenori, Kariya-shi, Aichi-ken (JP); Ota, Masaki, Kariya-shi, Aichi-ken (JP); Tarutani, Tomoji, Kariya-shi, Aichi-ken (JP)
(74) Representative: Leson, Thomas Johannes Alois, Dipl.-Ing.

(57) **Abstract**

A compressor includes a housing, a compression mechanism, a rotary unit and a sliding bearing. The compression mechanism compresses refrigerant in the housing. The rotary unit drives the compression mechanism. The sliding bearing is supported in the housing while rotatably supporting the rotary unit. The sliding bearing has a base member, porous metal layer and fluoro resin layer. The surface of the base member is coated with the porous metal layer having solid lubricating performance. The surface is coated with the fluoro resin layer through the porous metal layer.

## Description

### BACKGROUND OF THE INVENTION

The present invention relates to a compressor provided with a sliding bearing which rotatably supports a rotary unit o drive a compression mechanism.

Japanese Unexamined Patent Publication No. 4-81586 discloses this type of sliding bearing. In this prior art, a main shaft functioning as a rotary unit, which transmits rotary force to a pump mechanism of a refrigerant pump, is rotatably supported by a bearing bushing functioning as a sliding bearing. In the constitution, the bearing bushing is used to rotatably support the main shaft. Manufacturing cost of the bearing bushing is reduced more than that of a rolling bearing. Note that in the prior art the bearing bushing is made of porous ceramic.

However, the bearing bushing made of porous ceramic does not have solid lubricating performance. In addition, since the clearance between the bearing bushing and the main shaft is predetermined to be small such that the main shaft is supported by the bearing bushing without rattle, lubricating oil contained in refrigerant scarcely reaches a sliding portion between the bearing bushing and the main shaft. That is, the sliding portion between the bearing bushing and the main shaft tends to be worn. Therefore, lifetime of the bearing bushing is shortened.

### SUMMARY OF THE INVENTION

The present invention addresses a compressor with long life which is manufactured at low cost.

According to the present invention, a compressor includes a housing, a compression mechanism, a rotary unit and a sliding bearing. The compression mechanism compresses refrigerant in the housing. The rotary unit drives the compression mechanism. The sliding bearing is supported in the housing while rotatably supporting the rotary unit. The sliding bearing has a base member, porous metal layer and fluoro resin layer. The surface of the base member is coated with the porous metal layer having solid lubricating performance. The surface is coated with the fluoro resin layer through the porous metal layer.

Furthermore, in the present invention, a sliding bearing for rotatably supporting a rotary unit includes a base member, porous metal layer and fluoro resin layer. The porous metal layer coats a surface of the base member. The porous metal layer has solid lubricating performance. The fluoro resin layer coats the surface through the porous metal layer.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a diagram in a cross-sectional view illustrating a single-headed piston type compressor according to a first embodiment of the present invention;
FIG. 2 is a diagram in a partial enlarged longitudinal-sectional view illustrating a drive shat, a radial sliding bearing and a front wall which are for use in the single-headed piston type compressor according to the first preferred embodiment of the present invention;
FIG. 3 is a diagram in a partial enlarged view illustrating a typical surface of the radial sliding bearing for use in the single-headed piston type compressor according to the first preferred embodiment of the present invention;
FIG. 4 is a diagram in a partial cross-sectional view illustrating a single-headed piston type compressor according to a second preferred embodiment of the present invention;
FIG. 5 is a diagram in a perspective view illustrating a first plate of a thrust sliding bearing for use in the single-headed piston type compressor according to the second embodiment of the present invention;
FIG. 6 is a diagram in a cross-sectional view illustrating a double-headed piston type compressor according to a third preferred embodiment of the present invention; and
FIG. 7 is a diagram in a cross-sectional view illustrating a scroll type compressor according to a fourth embodiment of the present invention.

### DETAILED DESCRIPTION OF THE PREFERRED EMBODIMENTS

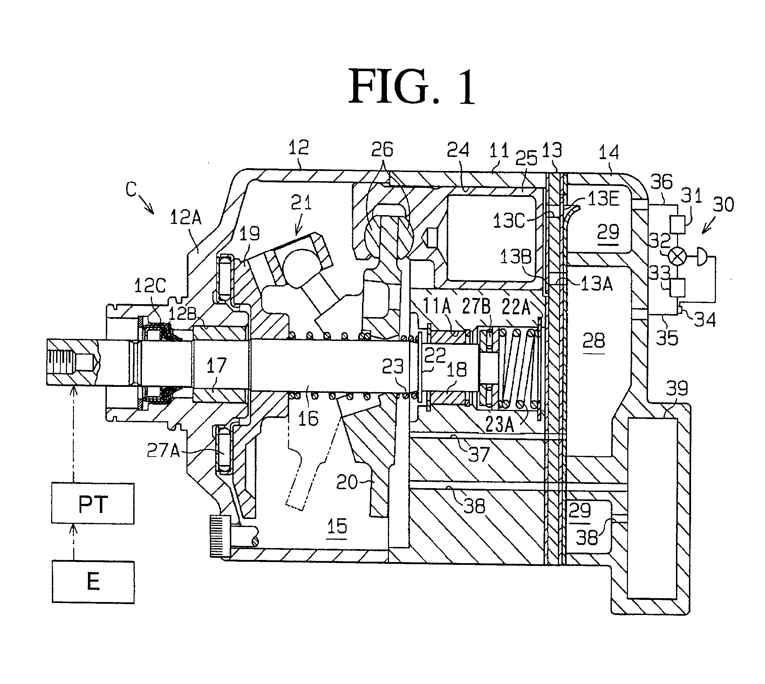

A single-headed piston type compressor in a vehicle air conditioner according to a first preferred embodiment of the present invention will be described with reference to FIGs. 1 through 3. In FIG. 1, a left side of the drawing is front and a right side of the drawing is rear.

As shown in FIG. 1, a cylinder block 11, a front housing 12, a valve plate assembly 13 and a rear housing 14 constitute a housing of a compressor C as a whole or a compressor housing. The front housing 12 is secured to the front end of the cylinder block 11. The rear housing 14 is secured to the rear end of the cylinder block 11 through the valve plate assembly 13. The cylinder block 11 and the front housing 12 define a crank chamber 15. A drive shaft 16 is rotatably supported in the compressor housing and extends through the crank chamber 15.

Still referring to FIG. 1, the front end of the drive shaft 16 is supported in the front housing 12 by a radial sliding bearing 17. The radial sliding bearing 17 is fitted into a through hole 12B formed in the front wall 12A of the front housing 12. The rear end of the drive shaft 16 is supported in the cylinder block 11 by a radi I sliding bearing 18. The radial sliding bearing 18 is fitted into a through hole 11A formed in the cylinder block 11.

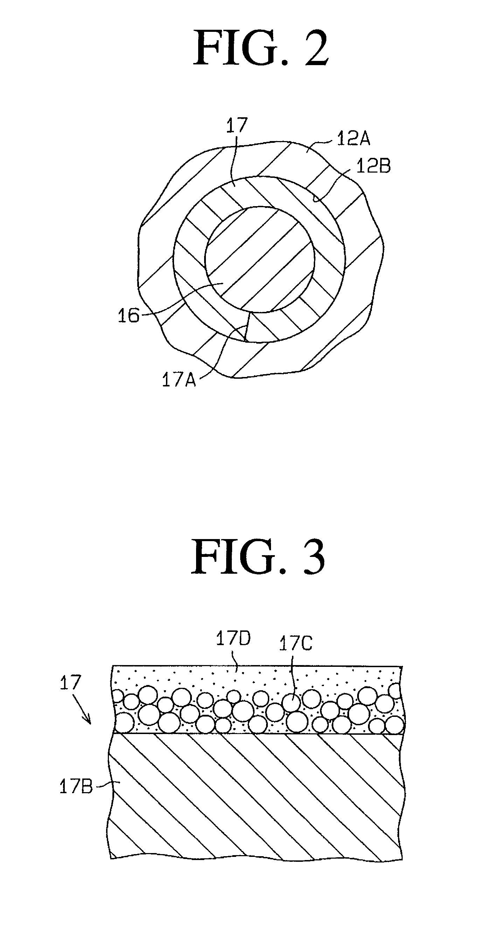

As shown in FIG. 2, the radial sliding bearing 17 is formed by bending a flat material in a cylindrical shape such that one end and the other end of the flat material meet with each other at a joint 17A. The radial sliding bearing 17 is inserted in the through hole 12B formed in the front wall 12A while supporting the drive shaft 16. In this state, the clearance between the outer circumferential surface of the drive shaft 16 and the inner circumferential surface of the radial sliding bearing 17 is minimized to such an extent that the drive shaft 16 is rotatably supported by the radial sliding bearing 17. The clearance between the outer circumferential surface of the radial sliding bearing 17 and the inner circumferential surface of the through hole 12B is designed such that the outer circumferential surface of the radial sliding bearing 17 adheres to the inner circumferential surface of the through hole 12B as much as possible. The gap at the joint 17A between the ends of the radial sliding bearing 17 is designed to be as small as possible.

As shown in FIG. 3, a surface of a base member 17B of the radial sliding bearing 17, which is on the side of the drive shaft 16, is coated with fluoro resin layer 17D such as polytetrafluoroethylene or PTFE through a layer 17C of sintered bronze, which is porous metal layer having solid lubricating performance. In the first embodiment, the base member 17B is made of iron such as SPCC.

Still referring to FIG. 3, before the radial sliding bearing 17 is bent, the surface of the base member 17B which is in a flat state is coated with the sintered bronze layer 17C, and then the sintered bronze layer 17C is coated with the fluoro resin layer 17D such that some amount of the fluoro resin layer 17D occupies porosity formed in the sintered bronze layer 17C. The thickness of the surface of the fluoro resin layer 17D which has not occupied the porosity and the thickness of the sintered bronze layer 17C, are respectively predetermined to be approximately 30 µm and 220 µm.

Referring back to FIG. 1, the radial sliding bearing 18 is constituted in a similar manner other than having small dimensional differential in radial and axial directions from the radial sliding bearing 17. Also, the radial sliding bearing 18 is manufactured in a similar manner.

Still referring to FIG. 1, the front end of the drive shaft 16 extends outside of the compressor housing through the through hole 12B. The front end of the drive shaft 16 directly connects with a vehicle engine E functioning as an external drive source through a power transmission mechanism PT. At the front of the radial sliding bearing 17 in the through hole 12B, a lip type seal 12C is arranged, thereby preventing the refrigerant in the compressor housing from leaking out of the compressor housing through the through hole 12B.

In the crank chamber 15, a lug plate 19 made of iron is fixedly placed on the drive shaft 16 to integrally rotate with. The drive shaft 16 and the lug plate 19 constitute a rotary unit. Also, in the crank chamber 15, a swash plate 20 functioning as a cam plate is accommodated. The swash plate 20 is slidably and inclinably supported on the drive shaft 16 while operatively connects with the lug plate 19 through a hinge mechanism 21. Therefore, the swash plate 20 rotates synchronously with the lug plate 19 and the drive shaft 16, and is slidable along the axis of the drive shaft 16 and is inclinable with respect to the axis.

A circular clip 22 engages with the drive shaft 16. A spring 23 is arranged between the swash plate 20 and the circular clip 22. The spring 23 regulates inclination angle of the swash plate 20 with respect to the perpendicular plane to the drive shaft 16. That is, the spring 23 regulates the minimum inclination angle of the swash plate 20.

A plurality of cylinder bores 24 is formed through the cylinder block 11 to surround the drive shaft 16, although only one cylinder bore 24 is illustrated in FIG. 1. A single-headed piston 25 is accommodated in each of the cylinder bores 24 to be reciprocated. In the cylinder bore 24, a compression chamber as a compression region is defined between the piston 25 and the valve plate assembly 13. Front side of the piston 25 engages with the outer circumference of the swash plate 20 through a pair of shoes 26. Accordingly, as the drive shaft 16 is rotated, the movement in the direction of the axis at the distal end of the swash plate 20 is transmitted to the piston 25 through the shoes 26. Consequently, the piston 25 is reciprocated in each of the cylinder bores 24.

The piston 25, the shoes 26, the swash plate 20, the hinge mechanism 21 and the lug plate 19 constitute a crank mechanism. The crank mechanism, the cylinder block 11 including the cylinder bores 24, and the drive shaft 16 constitute a compression mechanism.

A thrust rolling bearing 27A is placed between the lug plate 19 and the front wall 12A of the front housing 12. The thrust rolling bearing 27A supports the rotary unit in a thrust direction, thereby receiving the compression reactive force acting on the lug plate 19.

A thrust rolling bearing 27B is accommodated in the through hole 11A. At the rear end of the through hole 11 A, a second circular clip 22A engages with the cylinder block 11. A second spring 23A is interposed between the thrust rolling bearing 27B and the second circular clip 22A. The cylinder block 11 supports the rear end of the drive shaft 16 through the thrust rolling bearing 27B, the second spring 23A and the second circular clip 22A, thereby restraining the rear end of the drive shaft 16 from moving rearward.

A suction chamber 28 and a discharge chamber 29 are defined between the valve plate assembly 13 and the rear housing 14. Refrigerant in the suction chamber 28 is drawn into the cylinder bore 24 through a suction port 13A formed on the valve plate assembly 13 by pushing away a suction valve 13B formed on the valve plate assembly 13 while the piston 25 moves from a top dead center to a bottom dead center. The refrigerant drawn into the cylinder bore 24 is compressed to a predetermined pressure level while the piston 25 moves from the bottom dead center to the top dead center. The compressed refrigerant is introduced into the discharge chamber 29 through a discharge port 13C formed on the valve plate assembly 13 by pushing away a discharge valve 13E formed on the valve plate assembly 13.

The suction chamber 28 connects with the discharge chamber 29 through an external refrigerant circuit 30. The external refrigerant circuit 30 mainly includes a condenser 31, a thermal expansion valve 32 as a decompression device, and an evaporator 33. The opening degree of the thermal expansion valve 32 is controlled based on the temperature and pressure detected in a temperature reacting pipe 34 attached toward the outlet or downstream of the evaporator 33. The thermal expansion valve 32 supplies the liquid refrigerant of which amount corresponds to cooling load, to the evaporator 33, thereby adjusting the amount of refrigerant circulated in the external refrigerant circuit 30. The outlet of the evaporator 33 connects with the suction chamber 28 in the compressor C through a first circulation pipe 35. The discharge chamber 29 in the compressor C connects with an inlet of the condenser 31 through a second circulation pipe 36.

The refrigerant in the discharge chamber 29 is introduced into the external refrigerant circuit 30. In the external refrigerant circuit 30, heat exchange is performed by utilizing the refrigerant. The refrigerant in the external refrigerant circuit 30 is introduced into the suction chamber 28 and drawn into the compression chamber in the cylinder bore 24 and compressed therein and discharged into the discharge chamber 29. This cycle is repeated.

In the cylinder block 11 and the valve plate assembly 13, a bleed passage 37 is formed to connect the crank chamber 15 to the suction chamber 28. Also, in the cylinder block 11, the valve plate assembly 13 and the rear housing 14, a supply passage 38 is formed to connect the discharge chamber 29 to the crank chamber 15. A control valve 39 is arranged in the supply passage 38, thereby adjusting the opening degree of the supply passage 38.

The refrigerant in the discharge chamber 29 tends to flow into the crank chamber 15 through the supply passage 38. At the same time, the refrigerant in the crank chamber 15 tends to flow into the suction chamber 28 through the bleed passage 37. Pressure Pc in the crank chamber 15 or crank pressure Pc is determined by adjusting the opening degree of the control valve 39. The pressure differential between the crank pressure Pc and the pressure in the compression chamber, which applied to the piston 25, is varied in accordance with the crank pressure Pc. At this time, inclination angle of the swash plate 20 is varied and an amount of stroke of the piston 25 is also varied. Accordingly, displacement is adjusted.

In the first embodiment, the suction chamber 28, the suction port 13A, the cylinder bore 24, the discharge port 13C and the discharge chamber 29 constitute a refrigerant route in the compressor housing.

The operation of the above described single-headed piston type compressor C will be described. As shown in FIG. 1, when the drive force of the vehicle engine E is transmitted to the drive shaft 16 through the power transmission mechanism PT, the swash plate 20 rotates with the drive shaft 16. While the swash plate 20 rotates, each piston 25 reciprocates in the cylinder bore 24 in an amount of stroke corresponding to the inclination angle of the swash plate 20. Thus, the refrigerant is drawn into in the cylinder bore 24 and compressed therein and then discharged one after another.

Still referring to FIG. 1, when the opening degree of the control valve 39 decreases, the amount of high-pressure refrigerant which moves from the discharge chamber 29 to the crank chamber 15 through the supply passage 38 is decreased. Therefore, the crank pressure Pc decreases. At this time, the inclination angle of the swash plate 20 is increased. That is, displacement of the compressor C is increased. On the contrary, when the opening degree of the control valve 39 increases, the amount of high-pressure refrigerant which moves from the discharge chamber 29 to the crank chamber 15 through the supply passage 38 is increased. Therefore, the crank pressure Pc increases. At this time, the inclination angle of the swash plate 20 is deceased. That is, displacement of the compressor C is decreased.

As shown in FIG. 2 in combination with FIG. 1, the drive shaft 16 slides with respect to the fluoro resin layer 17D of the radial sliding bearing 17, which has solid lubricating performance. Therefore, the drive shaft 16 is scarcely worn. Even if the fluoro resin layer 17D is worn, the radial sliding bearing 17 exposes the sintered bronze layer 17C, which also has solid lubricating performance. Therefore, the drive shaft 16 slides with respect to the sintered bronze layer 17C of the radial sliding bearing 17. Accordingly, the drive shaft 16 slides with respect to the radial sliding bearing 17, thereby being maintained so as not to be worn. In a similar manner, the drive shaft 16 slides with respect to the radial bearing 18, thereby being maintained so as not to be worn.

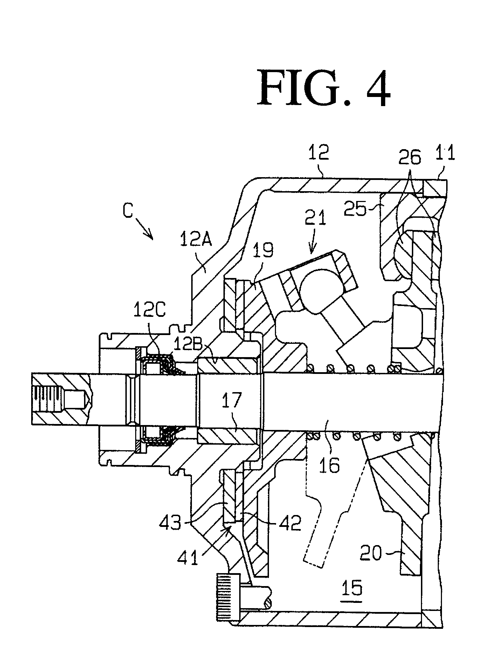

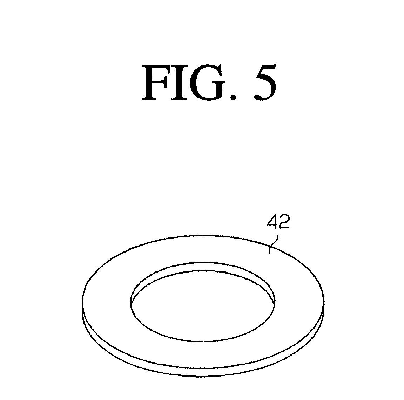

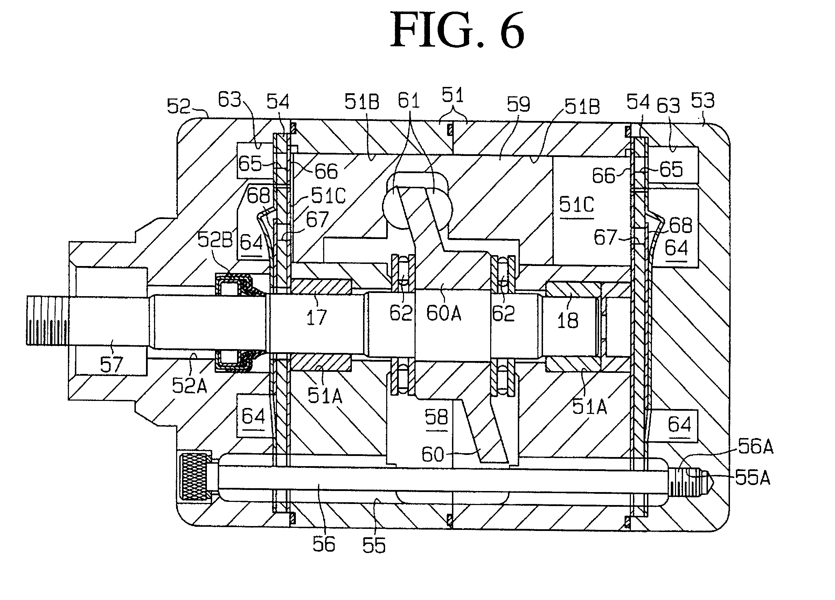

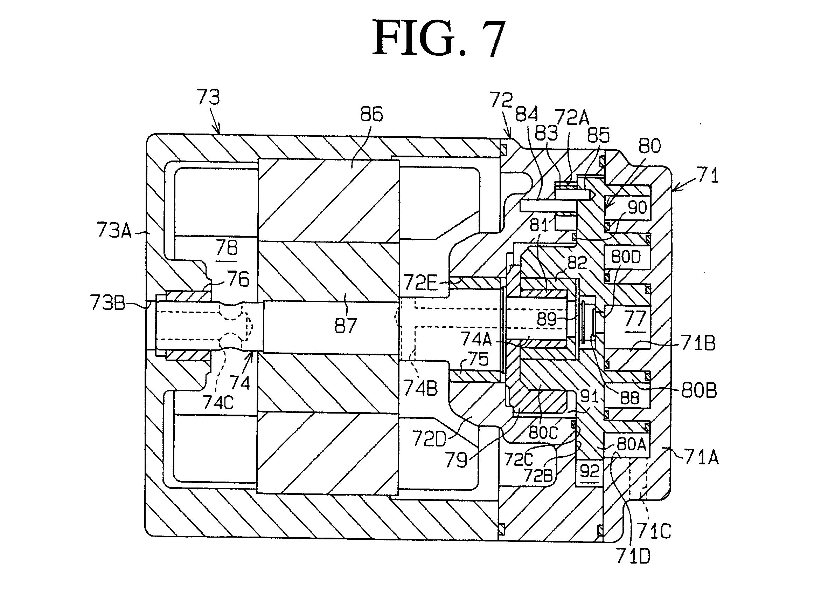

In the first embodiment, the following effects (1) through (5) are obtained.
(1) As shown in FIG. 1, the radial sliding bearing 17 is employed to support the rotary unit in a radial direction, thereby reducing the manufacturing cost more than a rolling bearing. Since the fluoro resin layer 17D and the sintered bronze layer 17C are interposed between the drive shaft 16 and the base member 17B, the drive shaft 16 slides with respect to the radial sliding bearing 17 so as not to be worn. Therefore, lifetime of the compressor C is relatively extended. Also, since the base member 17B is coated with the fluoro resin layer 17D and the sintered bronze layer 17C such that the fluoro resin layer 17D occupies the porosity formed in the sintered bronze layer 17C, the fluoro resin layer 17D is scarcely peeled off the radial sliding bearing 17.
(2) As shown in FIG. 3, the sintered bronze layer 17C which has excellent solid lubricating performance is employed as the porous metal layer. Even if the fluoro resin layer 17D of the radial sliding bearing 17 is worn, the sintered bronze layer 17C is exposed. Therefore, the radial sliding bearing 17 maintains excellent solid lubricating performance.
(3) The PTFE is employed as the fluoro resin layer 17D. Since the PTFE has relatively excellent solid lubricating performance among the fluoro resin layer 17D, the radial sliding bearing 17 relatively sufficiently lubricates on the drive shaft 16.
(4) The radial sliding bearing 17 is inserted in the through hole 12B while supporting the drive shaft 16. In this state, the clearance between the outer circumferential surface of the drive shaft 16 and the inner circumferential surface of the radial sliding bearing 17 is minimized to such an extent that the drive shaft 16 is rotatably supported by the radial sliding bearing 17. The clearance between the outer circumferential surface of the radial sliding bearing 17 and the inner circumferential surface of the through hole 12B is designed such that the outer circumferential surface of the radial sliding bearing 17 adheres to the inner circumferential surface of the through hole 12B as much as possible. At the joint 17A of the radial sliding bearing 17, the gap between the ends of the radial sliding bearing 17 is designed to be as small as possible. Accordingly, in the through hole 12B, the pressure of the space between the radial sliding bearing 17 and the lip type seal 12C is easily maintained to be lower than the crank pressure Pc. Therefore, the load acting on the lip type seal 12C, which prevents the refrigerant from leaking out of the compressor housing through the through hole 12C, is reduced.
(5) The radial sliding bearing 17 is arranged in the crank chamber 15, which is not in the refrigerant route. In detail, the radial sliding bearing 17 is accommodated in the through hole 12B. In the crank chamber 15, since the refrigerant is not relatively sufficiently lubricated, misty lubricating oil contained in the refrigerant is not sufficiently lubricated, either. However, the radial sliding bearing 17 has solid lubricating performance. Therefore, even in the crank chamber 15, the radial sliding bearing 17 restrains the sliding portion between the radial sliding bearing 17 and the drive shaft 16 from being worn. That is, the radial sliding bearing 17 is effectively employed to the compressor C of the first embodiment.
   In a similar manner, the above effects (1) through (5) of the radial sliding bearing 17 according to the present invention is applied to the radial sliding bearing 18.
   A single-headed piston type compressor C in a vehicle air conditioner according to a second preferred embodiment of the present invention will be described with reference to FIGs. 4 and 5. In the second preferred embodiment, a thrust sliding bearing is employed in place of the thrust rolling bearing 27A of the first embodiment. The other components of the second preferred embodiment are the same as that of the first embodiment. The same reference numerals of the first preferred embodiment are applied to substantially the same components in the second preferred embodiment. Overlapped description is omitted. In FIG. 4, a left side of the drawing is front and a right side of the drawing is rear.
   As shown in FIG. 4, a thrust sliding bearing 41 is placed between the front wall 12A of the front housing 12 and the lug plate 19 in place of the thrust rolling bearing 27A. The thrust sliding bearing 41 is constituted of a first plate 42 and a second plate 43. The first plate 42 which has an annular iron base member is fixed to the lug plate 19. The second plate 43 which has an annular iron is fixed to the front wall 12A. FIG. 5 shows a configuration of the first plate 42, which is flat and annular.
   Referring to FIG. 4 in combination with FIG. 5, the outside diameter of the first plate 42 is predetermined to be slightly smaller than that of the second plate 43. The first plate 42 has a flat base member. The surface of the flat base member which faces to the second plate 43, or the front surface of the flat base member, is coated with fluoro resin layer through the sintered bronze layer as porous metal layer in a similar manner to the radial sliding bearings 17 and 18 of the first embodiment. In the second embodiment, PTFE is employed.
   The surface of the second plate 43 which faces to the first plate 42, or the rear surface of the second plate 43 is formed to be smooth by grinding. Since the front surface of the first plate 42 slidably contacts with the rear surface of the second plate 43, the frontward movement of the rotary unit in the thrust direction is regulated.
   In the second embodiment, the above effects (1) through (5) are obtained. Besides, the following effects (6) and (7) are obtained.
(6) The thrust sliding bearing 41 is employed as a bearing supporting the rotary unit on the side to which compression reactive force generated in the compression mechanism is applied through the lug plate 19, thereby enabling the cost to be reduce more than the thrust rolling bearing 27A. Since the first plate 42 is provided with the fluoro resin layer and the sintered bronze layer, the thrust bearing 41 is not easily worn. Therefore, the lifetime of the compressor C is extended. Also, since the flat base member of the first plate 42 is coated with the fluoro resin layer through the sintered bronze layer such that some amount of the fluoro resin layer occupies porosity formed in the sintered bronze layer, the fluoro resin layer is scarcely peeled off the flat base member.
(7) The thrust sliding bearing 41 is arranged in the crank chamber 15, which is not in the refrigerant route. In the crank chamber 15, since the refrigerant is not relatively sufficiently lubricated, misty lubricating oil contained in the refrigerant is not sufficiently lubricated, either. However, the thrust sliding bearing 41 has solid lubricating performance. Therefore, even in the crank chamber 15, the thrust sliding bearing 41 restrains the sliding portion between the first plate 42 and the second plate 43 from being worn. That is, the radial sliding bearing 41 is effectively employed to the compressor C of the second embodiment.
   A double-headed piston type compressor in a vehicle air conditioner according to a third preferred embodiment of the present invention will be described with reference to FIG.6. In the third preferred embodiment, radial sliding bearings which support the rotary unit in the radial direction are constituted in a similar manner to those of the first and second embodiments. The other components of the third preferred embodiment are the same as that of the first and second embodiments. The same reference numerals of the third preferred embodiment are applied to substantially the same components in the first and second preferred embodiments. Overlapped description is omitted. In FIG. 6, a left side of the drawing is front and a right side of the drawing is rear.
   As shown in FIG. 6, a pair of cylinder blocks 51 are secured to each other. A front housing 52 is secured to the front side of the cylinder blocks 51 and a rear housing 53 is secured to the rear side of the cylinder blocks 51, respectively through a valve plate assembly 54.
   Still referring to FIG. 6, a through hole 55 is formed to penetrate the front housing 52 and the cylinder blocks 51 and to reach the rear housing 53. A through bolt 56 is inserted in the through hole 55. A screw portion 56A formed at the distal end of the through bolt 56 is screwed into a tapped hole 55A formed in the rear housing 53. The front housing 52, the cylinder blocks 51 and the rear housing 53 are fixedly bolted by the through bolts 56, thereby forming a configuration of the compressor.
   An iron drive shaft 57 functioning as a rotary shaft is rotatably supported at the center of the cylinder blocks 51 and the front housing 52 by a pair of the radial sliding bearings 17 and 18. The radial sliding bearings 17 and 18 are constituted in a similar manner to those of the first embodiment. The radial sliding bearings 17 and 18 are respectively disposed in a pair of support holes 51 A formed at the center of the cylinder blocks 51 to communicate with a crank chamber 58 defined by the pair of cylinder blocks 51.
   The radial sliding bearing 17, which is inserted in the associated support hole 51A, supports the drive shaft 57. In this state, the clearance between the outer circumferential surface of the drive shaft 57 and the inner circumferential surface of the radial sliding bearing 17 is minimized to such an extent that the drive shaft 57 is rotatably supported by the radial sliding bearing 17. The clearance between the outer circumferential surface of the radial sliding bearing 17 and the inner circumferential surface of the through hole 51A is designed such that the outer circumferential surface of the radial sliding bearing 17 adheres to the inner circumferential surface of the through hole 51A as much as possible. At the joint 17A of the radial sliding bearing 17, the gap between the ends of the radial sliding bearing 17 is designed to be as small as possible. In a similar manner, the radial sliding bearing 18, which is inserted in the associated support hole 51A, supports the drive shaft 57.
   The front end of the drive shaft 57 extends outside of a housing of the compressor or a compressor housing through the through hole 52A formed at the center of the front housing 52. The front end of the drive shaft 16 operatively connects with an external drive source such as a vehicle engine through a power transmission mechanism which is not shown in the drawings. Thus, the drive force of the external drive source is transmitted to the drive shaft 57.
   The through hole 52A and the through hole 51A formed on the front side of the cylinder blocks 51 communicate with each other through a through hole formed in the valve plate assembly 54 arranged on the front side. In the through hole 52A, a lip type seal 52B is disposed, thereby preventing the refrigerant in the compressor housing from leaking out of the compressor housing through the through hole 52A.
   A plurality of cylinder bores 51B is formed through the cylinder blocks 51 to surround the drive shaft 57. A double-headed piston 59 is accommodated in each of the cylinder bores 51B to be reciprocated. In the cylinder bore 51B, a compression chamber 51C as a compression region is defined between the piston 59 and the valve plate assembly 54.
   The crank chamber 58 is connected to the external refrigerant circuit which is not shown in the drawing, thereby constituting a suction pressure region. That is, the crank chamber 58 constitutes a refrigerant route in the compressor housing. At the center of a swash plate 60 having a cylindrical boss 60A, a through hole is formed. The drive shaft 57 is fixedly fitted into the through hole in the crank chamber 58. The outer circumference of the swash plate 60 engages with the middle of the piston 59 through a pair of shoes 61. The drive shaft 57 and the swash plate 60 constitute the rotary unit.
   A pair of thrust rolling bearings 62 is placed on the drive shaft 57 such that the cylinder blocks 51 sandwich the cylindrical boss 60A of the swash plate 60 respectively through the thrust rolling bearings 62. The piston 59 is reciprocated in the cylinder bore 51B through the swash plate 60 by the rotation of the drive shaft 57.
   The shoes 61 and the swash plate 20 constitute a crank mechanism. The crank mechanism, the cylinder blocks 51 including the cylinder bores 51B, the piston 59 and the drive shaft 57 constitute a compression mechanism.
   A suction chamber 63 is defined at the outer circumferential side in the front housing 52 and the rear housing 53. The suction chamber 63 is formed to communicate with the through hole 55 through a communication hole which is not shown in the drawings, and is connected to the crank chamber 58 through the through hole 55. The discharge chamber 64 is defined at the inner circumferential sides in the front housing 52 and the rear housing 53, respectively. The discharge chamber 64 is connected to the external refrigerant circuit.
   A plurality of suction ports 65 is formed in the valve plate assembly 54 to correspond to the associated suction chamber 63. A suction valve 66 is also formed for opening and closing the suction port 65 in the valve plate assembly 54. As the piston 59 moves from a top dead center to a bottom dead center, the suction valve 66 is opened. At this time, refrigerant in the suction chamber 63 is drawn into the compression chamber 51C.
   Also, a plurality of discharge ports 67 is formed in the valve plate assembly 54 to correspond to the associated discharge chamber 64. A discharge valve 68 is formed for opening and closing the discharge port 67 in the valve plate assembly 54. As the piston 59 moves from the bottom dead center to the top dead center, the discharge valve 68 is opened. At this time, refrigerant in the compression chamber 51C is compressed to be predetermined pressure and discharged into the discharge chamber 64.
   In the third embodiment, the crank chamber 58, the through hole 55, the suction chamber 63, the suction port 65, the compression chamber 51C, the discharge port 67 and the discharge chamber 64 constitute a refrigerant route in the compressor housing. Various portions in the refrigerant route are lubricated by misty lubricating oil contained in the refrigerant in the refrigerant route. That is, in the crank chamber 58 constituting the refrigerant route, the drive shaft 57 slides with respect to the radial sliding bearings 17 and 18 based on the solid lubricating performance of the fluoro resin layer and the sintered bronze layer, and also by lubrication of the lubricating oil.
   In the third embodiment, the above effects (1) through (3) are obtained. Besides, the following effects (8) and (9) are obtained.
(8) The radial sliding bearing 17 is inserted in the through hole 51A while supporting the drive shaft 57. In this state, the clearance between the outer circumferential surface of the drive shaft 57 and the inner circumferential surface of the radial sliding bearing 17 is minimized to such an extent that the drive shaft 16 is rotatably supported by the radial sliding bearing 17. The clearance between the outer circumferential surface of the radial sliding bearing 17 and the inner circumferential surface of the through hole 51A is designed such that the outer circumferential surface of the radial sliding bearing 17 adheres to the inner circumferential surface of the through hole 51A as much as possible. At the joint 17A of the radial sliding bearing 17, the gap between the ends of the radial sliding bearing 17 is designed to be as small as possible. Accordingly, in the through hole 52A, the pressure of the space between the radial sliding bearing 17 and the lip type seal 52B is easily maintained to be lower than the pressure in the crank chamber 58. Therefore, the load acting on the lip type seal 52B, which prevents the refrigerant from leaking out of the compressor housing through the through hole 52A, is reduced. In a similar manner, the radial sliding bearing 18, which is inserted in the through hole 51A, supports the drive shaft 57.
(9) The radial sliding bearings 17 and 18 are arranged in the crank chamber 58, which constitutes a refrigerant route in the compressor housing. In detail, the radial sliding bearings 17 and 18 are accommodated in the through hole 51A. Accordingly, sliding portions between the drive shaft 57 and the radial sliding bearings 17 and 18 are effectively lubricated by the radial sliding bearings 17 and 18 having solid lubricating performance and by misty lubricating oil contained in the refrigerant in the refrigerant route.
   A scroll type compressor in a vehicle air conditioner according to a fourth preferred embodiment of the present invention will be described with reference to FIG. 7. In the fourth preferred embodiment, radial sliding bearings are employed.
   As shown in FIG. 7, a center housing 72 is secured to a fixed scroll 71. A motor housing 73 is secured to the center housing 72. The fixed scroll 71, the center housing 72 and the motor housing 73 form a housing compressor of the fourth embodiment.
   Still referring to FIG. 7, an iron shaft 74 functioning as a rotary shaft is rotatably supported in the center housing 72 and the motor housing 73 respectively by radial sliding bearings 75 and 76. A crankshaft 74A is integrally formed with the shaft 74. The motor housing 73 and the center housing 72 define a motor chamber 78.
   A balance weight 79 is supported by the crankshaft 74A. The shaft 74 and the balance weight 79 constitute a rotary unit. A movable scroll 80 is arranged to oppose the fixed scroll 71 between the center housing 72 and the fixed scroll 71. The movable scroll 80 is relatively rotatably supported by the crankshaft 74A through a radial sliding bearing 81 and a bushing 82. The movable scroll 80 has a movable base plate 80A and a movable spiral wall 80B that extends from the movable base plate 80A. The fixed scroll 71 has a fixed base plate 71A and a fixed spiral wall 71B that extends from the fixed base plate 71A. The movable spiral wall 80B and the fixed spiral wall 71B engage with each other between the movable scroll 80 and the fixed scroll 71.
   A boss 80C is formed to protrude rearward from the movable base plate 80A, in the drawing, to protrude leftward from the movable base plate 80A. The bushing 82 which is substantially in a cylindrical shape is fitted into the boss 80C. The radial sliding bearing 81 is accommodated in the bushing 82 to be fitted. The inner circumferential surface of the radial sliding bearing 81 slides with respect to the outer circumferential surface of the crankshaft 74A.
   The fixed base plate 71A, the fixed spiral wall 71B, the movable base plate 80A and the movable scroll wall 80B define a compression chamber 77 as a compression region. The volume of the compression chamber 77 is decreased in accordance with rotation of the movable scroll 80.
   A plurality of recesses 72A is formed substantially on the identical circumference on the front side of the center housing 72, or rightward with respect the center housing 72 in the drawing. In the fourth embodiment, four recesses are formed. An annular ring 83 is accommodated in each of the recesses 72A. A fixed pin 84 is fixed to the center housing 72. A movable pin 85 is fixed to the movable scroll 80. The fixed pin 84 and the movable pin 85 are inserted in each annular ring 83. The movable scroll 80 rotates about an axis of the fixed scroll 71 in accordance with rotation of the crankshaft 74A while the annular ring 83, the fixed pin 84, the movable pin 85 prevents the self rotation of the movable scroll 80.
   A stator 86 is fixed to the inner circumferential surface of the motor housing 73. A rotor 87 is fixed to the outer circumferential surface of the shaft 74 to oppose the stator 86. The stator 86 and the rotor 87 constitute an electric motor. The rotor 87 and the shaft 74 are integrally rotated by supplying electricity to the stator 86.
   The movable base plate 80A of the movable scroll 80 has a discharge port 80D substantially at the center thereof. In the movable base plate 80A, a float type valve 88 is disposed to correspond to the discharge port 80D. The discharge port 80D communicates with a space in the boss 80C or a discharge chamber 89 through the float type valve 88. The shaft 74 has a first passage 74B therethrough in the vicinity of the radial sliding bearing 75 to communicate with the discharge chamber 89 and the motor chamber 78. The shaft 74 also has a second passage 74C therethrough in the vicinity of the radial sliding bearing 76 to communicate with the motor chamber 78 and the outside of the motor housing 73. As the movable scroll 80 rotates about the axis of the fixed scroll 71, the refrigerant which is introduced into the compression chamber 77 through an inlet 71C formed in the fixed scroll 71, passes through the discharge port 80D, the discharge chamber 89, the first passage 74B, the motor chamber 78 and the second passage 74C, and flows outside of the compressor housing through an outlet 73B formed through an end wall 73A of the motor housing 73. That is, the discharge chamber 89, the first passage 74B, the motor chamber 78 and the second passage 74C are high-pressure region which has substantially equal pressure to the pressure in the discharge chamber 89.
   The center housing 72 has an extending portion 72B that extends toward an axis of the shaft 74 along the rear surface of the movable scroll 80. The extending portion 72B extends nearer to the axis of the shaft 74 than the outermost inner circumferential surface of the fixed scroll 71. An annular groove 72C, of which cross-section is substantially in a square shape, is formed on the surface of the extending portion 72B which faces to the rear surface of the movable scroll 80. An annular seal 90 occupies the annular groove 72C, thereby separating the rest of the rear region of the movable scroll 80 into a space 91 and a low-pressure region 92. The low-pressure region 92 has substantially equal pressure to the pressure of the introduced refrigerant.
   The center housing 72 has a partition wall 72D which is substantially in a cylindrical shape with a bottom. The partition wall 72D extends from the innermost extending portion 72B to surround the boss 80C of the movable scroll 80 and the balance weight 79. The radial sliding bearing 75 is inserted into a through hole 72E formed at the center of the partition wall 72D. The inner circumferential surface of the radial sliding bearing 75 slides with respect to the outer circumferential surface of the shaft 74.
   The radial sliding bearings 75, 76, and the radial sliding bearing 81 which is inserted into the bushing 82 are constituted in a similar manner to those of the first embodiment. That is, the radial sliding bearings 75, 76 and 81 are constituted in a similar manner to those of the first embodiment except dimension in radial and axial directions. Beside, the radial sliding bearings 75, 76 and 81 are manufactured in a similar manner to those of the first embodiment.
   The radial sliding bearings 75 and 81 are respectively inserted into the through hole 72E and the bushing 82 while the shaft 74 is inserted in the radial sliding bearings 75 and 81. In detail, the crankshaft 74A is inserted in the radial sliding bearing 81. In this state, the clearances between the outer circumferential surface of the shaft 74 and the inner circumferential surfaces of the radial sliding bearings 75, 81 are minimized to such an extent that the shaft 74 is rotatably supported by the radial sliding bearings 75, 81. The clearance between the outer circumferential surface of the radial sliding bearing 75 and the inner circumferential surface of the through hole 72E and the clearance between the outer circumferential surface of the radial sliding bearing 81 and the inner circumferential surface of the bushing 82 are designed such that the outer circumferential surfaces of the radial sliding bearings 75, 81 respectively adheres to the inner circumferential surfaces of the through hole 72E and the bushing 82 as much as possible. At the joint of the radial sliding bearing 75, the gap between the ends of the radial sliding bearing 75 is designed to be as small as possible. Also, at the joint of the radial sliding bearing 81, the gap between the ends of the radial sliding bearing 75 is designed to be as small as possible.
   The space 91 is defined between the outer circumferential surface of the boss 80C and the inner circumferential surface of the partition wall 72D. The space 91 is substantially separated from the motor chamber 78 since the radial sliding bearing 75 is arranged between the through hole 72E and the shaft 74. The discharge chamber 89 is substantially separated from the space 91 since the radial sliding bearing 81 is arranged between the bushing 82 and the crankshaft 74A. That is, the radial sliding bearings 75 and 81 are arranged so as to separate a space in the compressor housing in pressure. Also, since the bushing 82 is fitted into the boss 80C so as to adhere to, the discharge chamber 89 is separated from the space 91 through the clearance between the bushing 82 and the boss 80C.
   The pressure in the space 91 is controlled by a control valve, which is not shown in the drawing while the refrigerant in the high-pressure region such as the motor chamber 78 and the discharge chamber 89 leaks into the space 91 through fine clearances between the radial sliding bearings 75, 81 and the shaft 74. Therefore, the pressure in the space 91 is lower than that of the high-pressure region. Accordingly, the space 91 is maintained in pressure between the high-pressure region and the low-pressure chamber 92.
   Since the space 91 of which pressure is lower than that of the high-pressure region is arranged on the rear surface of the movable scroll 80, the load which is applied to the movable scroll 80 in the direction of the axis of the fixed scroll 71 toward the fixed scroll 71 by the pressure applied to the rear surface of the movable scroll 80 is reduced. Thus, the movable scroll 80 is smoothly rotated about the axis of the fixed scroll 71. Accordingly, the mechanical loss of the movable scroll 80 is reduced.
   Also, since the radial sliding bearings 75, 81 which are coated with the sintered bronze layer and the fluoro resin layer, have excellent solid lubricating performance, sliding portions between the radial sliding bearings 75, 81 and the shaft 74 are restrained from being worn. Therefore, the clearances at the sliding portions are restrained from increasing. Accordingly, the separation of the high-pressure region and the space 91 are maintained in pressure.
   The fixed scroll 71, the movable scroll 80, the center housing 72, the annular ring 83, the fixed pin 84, the movable pin 85, the bushing 82, the radial sliding bearings 75 and 81, the shaft 74, and the balance weight 79 constitute a scroll type compression mechanism.
   In the fourth embodiment, the above effects (1) through (3) are obtained. Besides, the following effect (10) is obtained.
(10) The radial sliding bearing 81 is arranged between the discharge chamber 89 and the space 91 such that the discharge chamber 89 is separated in pressure from the space 91 by the radial sliding bearing 81. The radial sliding bearing 75 is arranged between the motor chamber 78 and the space 91 such that the motor chamber 78 is separated in pressure from the intermediate-pressure chamber 91 by the radial sliding bearing 75. Since the radial sliding bearings 75, 81 which are coated with the sintered bronze layer and the fluoro resin layer, have excellent solid lubricating performance, the sliding portions between the radial sliding bearings 75, 81 and the shaft 74 are restrained from being worn. Therefore, excellent seals between the radial sliding bearings 75, 81 and the shaft 74 are created and the high sealing performance is easily maintained. That is, the discharge chamber 89 is effectively separated in pressure from the space 91 without using another seal. The motor chamber 78 is also effectively separated in pressure from the space 91 without using another seal.

In the present invention, the following embodiments are also practiced. In the second embodiment, the first plate 42 may be fixed to the front wall 12A so as to directly slidably contact with the lug plate 19. In the constitution, the second plate 43 may be omitted. Therefore, the manufacturing cost may be reduced more. In this case, it is desired that a sliding surface of the lug plate 19, which contacts with the first plate 42, is formed to be smooth and flat. At this time, the sliding portion between the smooth and flat sliding surface of the lug plate 19 and the first plate 42 is relatively restrained from being worn. Accordingly, the lifetime of the compressor C is extended.

Also, in the second embodiment, a thrust sliding bearing may be arranged in place of the thrust rolling bearing 27B so as to restrain the drive shaft 16 from moving rearward.

Also, in the second embodiment, the radial sliding bearings 17,18 and the thrust sliding bearing 41 are employed as a sliding bearing. However, the thrust sliding bearing 41 alone may be employed as a sliding bearing.

In the third embodiment, a thrust sliding bearing, which has a similar constitution to the thrust sliding bearing 41 of the second embodiment, may be employed in place of the thrust rolling bearing 62 so as to regulate the drive shaft 57 and the swash plate 60 in the thrust direction. In this case, the manufacturing cost is reduced more.

Also, in the third embodiment, the radial sliding bearings 17 and 18 are employed as a sliding bearing. However, the thrust sliding bearing 41 of the second embodiment which is used in place of the thrust rolling bearing 62 alone may be employed as a sliding bearing.

In the first through third embodiments, the clearances between the outer circumferential surfaces of the drive shafts 16, 57 and the inner circumferential surfaces of the radial sliding bearings 17, 18 are not required to be minimized to such an extent that the drive shafts 16, 57 are rotatably supported by the radial sliding bearings 17, 18. The clearances may be predetermined to become large to such an extent that the drive shafts 16, 57 are rotatably supported by the radial sliding bearings 17, 18.

In the first through third embodiments, the clearance between the outer circumferential surface of the radial sliding bearing 17 and the inner circumferential surfaces of the through hole 12B and the support hole 51A are designed such that the outer circumferential surface of the radial sliding bearing 17 adheres to the inner circumferential surfaces of the through hole 12B and the support hole 51 A as much as possible. At the joint 17A of the radial sliding bearing 17, the gap between the ends of the radial sliding bearing 17 is designed to be as small as possible. However, the outer circumferential surface of the radial sliding bearing 17 is not required to adhere to the inner circumferential surfaces of the through hole 12B and the support hole 51 A. At the joint 17A of the radial sliding bearing 17, the gap between the ends of the radial sliding bearing 17 may be designed to become large to such an extent that the drive shafts 16, 57 are rotatably supported by the radial sliding bearing 17.

In the fourth embodiment, a clearance between the boss 80C and the bushing 82, a clearance between the bushing 82 and the radial sliding bearing 81, and a clearance between the radial sliding bearing 81 and the crankshaft 74A may be formed to allow the refrigerant to flow between the discharge chamber 89 and the space 91. Also, the clearance between the through hole 72E and the radial sliding bearing 75 and the clearance between the radial sliding bearing 75 and the shaft 74 may be formed to allow the refrigerant to flow between the motor chamber 78 and the space 91. When the pressure in the high-pressure region is throttled due to these clearances, the pressure of the space 91 is lowered than that of the high-pressure region. In this case, the load which is applied to the movable scroll 80 in the direction of the axis of the fixed scroll 71 toward the fixed scroll 71 by the pressure applied to the rear surface of the movable scroll 80 is reduced.

Also, in the fourth embodiment, the radial sliding bearings 75, 76 and 81 are employed as a sliding bearing. However, either the radial sliding bearings 75 and 76 or the radial sliding bearing 81 may be employed as a sliding bearing.

In all the above described embodiments, fluoro resin layer may be employed other than PTFE.

In all the above-described embodiments, porous metal layer such as lead which has solid lubricating performance may be employed other than bronze. In view of environment, lead should be restrained from being employed as much as possible.

In all the above described embodiments, an iron plate for use in a base member of the radial sliding bearings 17, 18, 75, 76 and 81 are employed other than SPCC.

In all the above-described embodiments, the radial sliding bearings 17, 18, 75, 76 and 81 are formed by bending an iron plate. However, method for forming the radial sliding bearings 17, 18, 75, 76 and 81 is not limited to the above method. For example, a base member may be formed in a cylindrical shape by casting and then the inner circumferential surface of the cylindrical base member may be coated with fluoro resin layer through porous metal layer.

The present examples and preferred embodiments are to be considered as illustrative and not restrictive, and the invention is not to be limited to the details given herein but may be modified within the scope of the appended claims.

A compressor includes a housing, a compression mechanism, a rotary unit and a sliding bearing. The compression mechanism compresses refrigerant in the housing. The rotary unit drives the compression mechanism. The sliding bearing is supported in the housing while rotatably supporting the rotary unit. The sliding bearing has a base member, porous metal layer and fluoro resin layer. The surface of the base member is coated with the porous metal layer having solid lubricating performance. The surface is coated with the fluoro resin layer through the porous metal layer.

## Claims

1. A compressor comprising:
a housing;
a compression mechanism in the housing for compressing refrigerant;
a rotary unit for driving the compression mechanism; and
a sliding bearing supported in the housing, the sliding bearing rotatably supporting the rotary unit, the sliding bearing including;
a base member,
porous metal layer for coating a surface of the base member, the porous metal layer having solid lubricating performance, and
fluoro resin layer for coating the surface through the porous metal
layer.

2. The compressor according to claim 1 wherein the sliding bearing is a radial sliding bearing which supports the rotary unit in a radial direction.

3. The compressor according to claim 1 wherein the sliding bearing is a thrust sliding bearing which supports the rotary unit in a thrust direction, and wherein the thrust sliding bearing is arranged so as to receive compression reactive force generated by the compression mechanism through the rotary unit.

4. The compressor according to claim 1 wherein the sliding bearing separates inside of the housing in pressure.

5. The compressor according to claim 1 wherein the porous metal layer is made of bronze.

6. The compressor according to claim 1 wherein the fluoro resin layer is PTFE.

7. The compressor according to claim 1 wherein the porous metal layer is sintered bronze layer and the fluoro resin layer is PTFE and wherein the thickness of the surface of the PTFE which has not occupied porosity formed in the sintered bronze layer and the thickness of the sintered bronze layer are respectively predetermined to be approximately 30 µm and 220 µm.

8. The compressor according to claim 1 wherein the rotary unit is made of iron.

9. The compressor according to claim 1 wherein the base member is made of iron.

10. The compressor according to claim 1 wherein the compression mechanism includes a plurality of cylinder bores, a piston accommodated in each of the cylinder bores, and a crank mechanism for reciprocating the piston in each of the cylinder bores based on rotation of the rotary unit, the housing including a crank chamber for accommodating the crank mechanism and the sliding bearing, the refrigerant compressed by the compression mechanism being introduced into the crank chamber, a stroke amount of the piston being varied by adjusting pressure in the crank chamber.

11. The compressor according to claim 10 wherein the piston is a single-headed piston, the crank mechanism including a hinge mechanism, rotation of the rotary unit being transmitted to the single-headed piston through the hinge mechanism by the crank mechanism.

12. The compressor according to claim 1 wherein the compression mechanism includes a plurality of cylinder bores, a piston accommodated in each of the cylinder bores, and a crank mechanism for reciprocating the piston in each of the cylinder bores based on rotation of the rotary unit, the housing including a crank chamber for accommodating the crank mechanism and the sliding bearing, the crank chamber constituting a refrigerant route in the housing.

13. The compressor according to claim 12 wherein the piston is a double-headed piston for compressing the refrigerant at both ends of the piston, the crank mechanism being arranged between the ends.

14. The compressor according to claim 1 wherein the compression mechanism is a scroll type compression mechanism.

15. The compressor according to claim 14 further comprising an electric motor for driving the scroll type compression mechanism.

16. The compressor according to claim 1 wherein the rotary unit includes at least one of a drive shaft, a lug plate and a swash plate.

17. A sliding bearing for rotatably supporting a rotary unit comprising;
a base member,
porous metal layer for coating a surface of the base member, the porous metal layer having solid lubricating performance, and
fluoro resin layer for coating the surface through the porous metal layer.

18. The sliding bearing according to claim 17 wherein the sliding bearing is a radial sliding bearing which supports the rotary unit in a radial direction.

19. The sliding bearing according to claim 17 wherein the sliding bearing is a thrust sliding bearing which supports the rotary unit in a thrust direction.

20. The sliding bearing according to claim 17 wherein the porous metal layer is made of bronze.

21. The sliding bearing according to claim 17 wherein the fluoro resin layer is PTFE.

22. The sliding bearing according to claim 17 wherein the porous metal layer is sintered bronze layer and the fluoro resin layer is PTFE.

23. The sliding bearing according to claim 17 wherein the rotary unit is made of iron.

24. The sliding bearing according to claim 17 wherein the base member is made of iron.
